(19) Europäisches Patentamt
European Patent Office
Office européen des brevets

(11) **EP 4 212 926 A1**

(12) **EUROPEAN PATENT APPLICATION**
published in accordance with Art. 153(4) EPC

(43) Date of publication:
**19.07.2023 Bulletin 2023/29**

(21) Application number: **21943196.2**

(22) Date of filing: **20.10.2021**

(51) International Patent Classification (IPC):
**G02B 5/28** (2006.01)   **G01J 3/26** (2006.01)
**G01J 3/45** (2006.01)

(52) Cooperative Patent Classification (CPC):
**G01J 3/26; G01J 3/45; G02B 5/28**

(86) International application number:
**PCT/KR2021/014635**

(87) International publication number:
**WO 2022/250209 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2021 KR 20210068223**
**22.07.2021 KR 20210096223**

(71) Applicant: **J&C Technology Co.,Ltd.**
**Gimcheon-si, Gyeongsangbuk-do 39659 (KR)**

(72) Inventors:
• **JANG, Min Jun**
  **Suwon-si, Gyeonggi-do 16688 (KR)**
• **JANG, Woo Jun**
  **Gimcheon-si, Gyeongsangbuk-do 39660 (KR)**

(74) Representative: **v. Bezold & Partner Patentanwälte
- PartG mbB**
**Ridlerstraße 57**
**80339 München (DE)**

(54) **INTERFERENCE FILTER, WIDE-ANGLE SPECTRAL IMAGING DEVICE HAVING SAME, AND DEPTH IMAGING DEVICE HAVING SAME**

(57)    The present invention relates to an interference filter, a wide-angle spectral imaging device having the same, and a depth imaging device having the same. The present invention provides an interference filter including: a first reflective layer having a first surface on which light is incident and a second surface opposite to the first surface; and a second reflective layer having a third surface opposite to the second surface at a distance and a fourth surface from which light is emitted, wherein the interference filter is configured such that the sum of values obtained by multiplying the refractive index and the thickness of each of all media on a virtual path parallel to an optical axis between the first surface of the first reflective layer and the fourth surface of the second reflective layer becomes greater as the distance from the optical axis increases.

[Fig. 6]

**Description**

**Technical Field**

The present invention relates to an interference filter, a wide-angle spectral imaging device having the same, and a depth imaging device having the same.

**Background Art**

[Spectral imaging technology]

Spectral imaging technology refers to a technology that provides two-dimensional image information according to a spectrum band. The spectral imaging technology has been used in various fields such as PCB inspection, counterfeit bill inspection, skin characteristic measurement, food inspection, and the like.

A spectral imaging device includes an optical system such as a light receiving lens or a light projection lens, a light receiver including a light receiving sensor, and a spectral device.

The optical receiver is divided into a plurality of areas to receive light from a subject and generate an electrical signal.

The spectral device is disposed in front of the light receiving sensor of the light receiver. The spectral device may be largely classified into a monochromator method and an optical tunable filter method. The optical tunable filter may be largely divided into a fixed type and a variable type. The optical tunable filter serves to pass only light in a specific wavelength range. The fixed optical tunable filter may include a filter wheel method and a Fabry-Perot interference filter method.

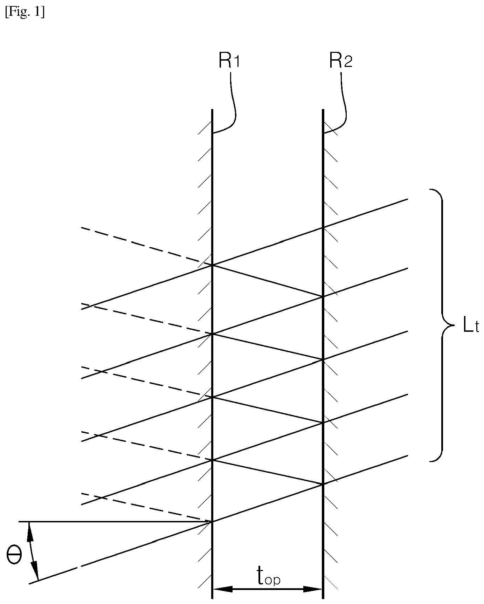

FIG. 1 is a diagram illustrating a Fabry-Perot Interferometer (FPI), which is an example of the optical tunable filter. As shown in FIG. 1, the Fabry-Perot interferometer includes a pair of reflective surfaces R1 and R2 facing each other. The incident light is reflected between the reflective surfaces R1 and R2. Since the reflectance of the reflective surfaces R1 and R2 is not 100%, as the light of transmission wavelength is repeatedly reflected between the reflective surfaces R1 and R2, a certain ratio of light $L_t$ passes through the interference filter, and the rest is reflected back. In such a process, the light of a specific wavelength (transmission wavelength) causes constructive interference, and the rest of the light disappears through destructive interference.

In the Fabry-Perot interferometer, the transmission wavelength is determined according to the distance $t_{op}$ between the pair of reflective surfaces R1 and R2 and the angle of incidence θ. The reflective surface may be implemented as a metal-based single layer, or may be implemented as dielectric layers with a high index and a low index having a thickness of λ (transmission wavelength)/4. The former has a disadvantage in that the transmittance is lowered due to the absorption component in the reflective surface, whereas the latter can configure a filter with high reflectance and a narrow half-width.

Equation 1 below is to determine the transmission wavelength of the Fabry-Perot interferometer, where n indicates the refractive index of the material filled between the reflective surfaces, $t_{op}$ indicates the distance between the reflecting surfaces, θ indicates the angle of incidence, m indicates an integer, and λ indicates the transmission wavelength.

$$【Equation\ 1】$$

$$\lambda = t_{op} \times \frac{2n\cos\theta}{m}$$

According to Equation 1, the Fabry-Perot interferometer has a change in the transmitted wavelength according to the incident angle. In other words, when m is 1, the distance $t_{op}$ between a pair of reflective surfaces is λ0/2 ($t_{op}$=λ0/2), and air is filled between the reflective surfaces (n=1), the transmission wavelength of light entering the Fabry-Perot interferometer vertically is λ0. Also, as the incident angle of the incident light increases, the cosθ value decreases, so that the transmission wavelength may be shorter compared to λ0. For example, when the incident angle is 30 degrees, the transmitted wavelength is shortened to 0.866λ0. In other words, for the light incident perpendicular to the Fabry-Perot interferometer, only components with a wavelength of λ0 pass through the Fabry-Perot interferometer, whereas for the light incident at 30 degrees, only components with a wavelength of 0.866λ0 are transmitted.

In addition, as described above with reference to Equation 1, since the incident light does not always enter the Fabry-Perot interferometer at the ideal angle of incidence, i.e., perpendicularly, deviations may occur depending on the angle of incidence. When the incident light does not enter the Fabry-Perot interferometer perpendicularly, short-wavelength light with a wavelength that is about 10 to 20 nm shorter than the target central wavelength passes through the Fabry-Perot interferometer, so that the light of the target central wavelength may be blocked by the Fabry-Perot interferometer.

The incident angle may be different for each position of the interference filter. Generally, the incident angle of the light incident on the center portion of the Fabry-Perot interferometer is close to vertical, and the light incident on the outer portion of the Fabry-Perot interferometer is obliquely incident, so that the outer portion transmits light of a shorter wavelength compared to the center portion. Therefore, in the outer portion of the Fabry-Perot interferometer, the light of the target central wavelength may be blocked by the interference filter.

For example, as an optical filter, a Fabry-Perot interferometer with a center wavelength of 940 nm and a full width at half maximum of 30 nm was used. Herein, when the incident angle of the light incident on the outer part of the Fabry-Perot interferometer increases and the transmission wavelength moves toward the short wavelength of 20 nm, since the transmission wavelength of the Fabry-Perot interferometer at the outer part changes from 925 to 955 nm to 905 to 935 nm, the light having a wavelength range of 935 to 955 nm is beyond of the upper limit of 935 nm of a transmission wavelength range of the outer portion in the Fabry-Perot interferometer, and is thus blocked by the outer part of the Fabry-Perot interferometer. Accordingly, the outer portion of an image acquired by the spectral imaging device may be distorted.

In addition, when the incident light does not enter the Fabry-Perot interferometer perpendicularly, there is also a problem that a haze phenomenon may occur due to crosstalk.

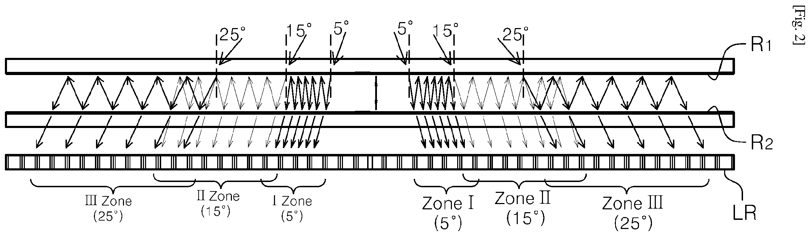

FIG. 2 is a view illustrating the propagation of light between the reflective surfaces R1 and R2 when incident light with a large incident angle enters the existing Fabry-Perot interferometer.

As shown in FIG. 2, when the incident angle is large, as the light is repeatedly reflected between the reflective surfaces R1 and R2, the moving distance in the direction orthogonal to the reflective surfaces R1 and R2 increases (the distance increases from Zone 1 to Zone 3). This distance becomes greater as the reflectance of the reflective surfaces R1 and R2 increases and the incident angle increases.

More specifically, the incident light with an incident angle of 5 degrees does not move much in the transverse direction until its intensity is weakened by repeated reflections, whereas the light with an incident angle of 25 degrees moves a long distance and thus is incident on adjacent pixels as well as pixels corresponding to the division areas of the subject of the array sensor in the optical receiver LR.

Table 1 shows the movement distance in the direction orthogonal to the reflective surface depending on the incident angle the reflectance of the reflective surface. An array sensor of an optical receiver usually has a pixel size of several micrometers.

[Table 1]

| Reflect -ivity | Effective incident light | Vibration frequency | Angle of incidence | | | | | | |
|---|---|---|---|---|---|---|---|---|---|
| | | | 0 | 5 | 10 | 15 | 20 | 25 | 30 |
| 0.95 | 90% | 45 | 0.0 | 3.7 | 7.4 | 11.3 | 15.4 | 19.7 | 24. 4 |
| 0.90 | 90% | 22 | 0.0 | 1.3 | 2.7 | 4.1 | 5.6 | 7.3 | 9.3 |
| 0.85 | 90% | 14 | 0.0 | 0.3 | 0.6 | 1.0 | 1.3 | 1.7 | 2.2 |

Referring to Table 1, when the angle of incidence is 0 degrees (normally incident), the movement distance is 0 um regardless of the reflectance, whereas when the angle of incidence is 30 degrees, the movement distance is about 9.3 um in the case of the reflectance of 0.9, and about 24.4 um in the case of the reflectance of 0.95. As the reflectance increases, the number of reflections increases, so that the moving distance increases. As the angle of incidence increases, the moving distance increases until one reflection.

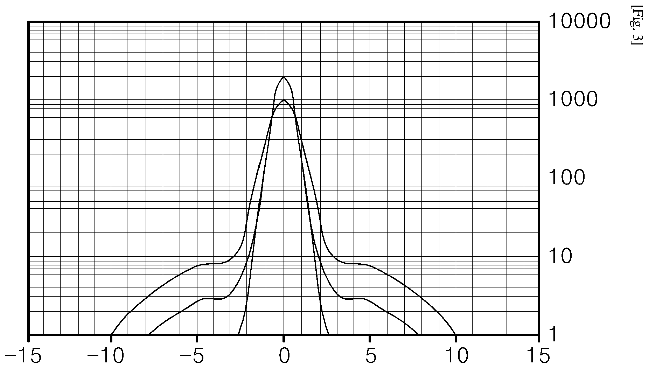

Therefore, it will be appreciated that as the reflectance and the incident angle increase, the moving distance is longer to affects adjacent areas, which results that the resolution of the spectral imaging device is lowered. FIG. 3 is a graph illustrating angular crosstalk to adjacent angles (pixels) according to haze (cloudiness) components. In FIG. 3, the horizontal axis represents the scattering angle, and the vertical axis represents the power (intensity). According to FIG. 3, it will be appreciated that the angular crosstalk to adjacent angles (pixels) increases as the haze (cloudiness) component increases.

In summary, the existing spectral imaging apparatus using the existing Fabry-Perot interferometer had the following problems.

First, since the incident angle of the light entering the outer portion of the Fabry-Perot interferometer is large, the light of the target wavelength band is blocked by the Fabry-Perot interferometer, so that light having a shorter wavelength than the target wavelength band may pass through the Fabry-Perot interferometer.

Second, when the incident angle of the incident light incident on the Fabry-Perot interferometer is larger, as it is repeatedly reflected between a pair of reflective surfaces, the moving distance of the reflected light in a direction orthogonal to the reflective surfaces increases. Therefore, since a crosstalk phenomenon occurs in which not only the pixels corresponding to the subject division area of the corresponding array sensor but also the adjacent pixels are irradiated by the incident light, the haze components increase and the resolution decreases toward the outer portion of the Fabry-Perot interferometer.

[Depth imaging technology]

In a depth imaging technology used in face recognition, AR, VR technology, etc., a camera using structured light (SL) and a TOF camera measuring the time-of-flight of light are used.

The structured light is used in such an approach as to irradiate an infrared pattern composed of tens of thousands of dots to a subject and then read the distortion of the infrared pattern by the subject. This approach has a disadvantage that the recognition rate drops significantly as the distance between the camera and the subject increases.

The TOF approach includes a direct approach that continuously emits infrared light at nanosecond (nS) intervals, and measuring the distance to the subject by measuring the time it takes for the light to hit the subject and reach the infrared sensor, and an in-direct approach that measures a change in phase of the light reflected from the subject.

The TOF camera obtains a 3D image by dividing a subject into a plurality of areas and measuring a distance to each area. The TOF approach may be divided into an approach of scanning mechanically, a solid state TOF approach of using MEMS mirrors, and a flash TOF approach of irradiating the subject in batches, depending on how the area is divided.

The TOF camera includes an optical system such as a light receiving lens or a flood lens, an optical receiver (light receiver) having a light receiving sensor, a light transmitter having a light source and a driving device, and an optical filter.

The optical receiver is divided into a plurality of areas, and each area receives the reflected light from the optical transmitter toward the subject, the external light directed toward the optical receiver, or the external light reflected from the subject, and then generates an electrical signal. The external light may be from the sun or artificial light.

The optical transmitter serves to irradiate the light toward the subject. The optical transmitter may radiate, for example, light having a narrow bandwidth belonging to ultraviolet, visible, and infrared regions in a pulse form.

The optical filter is disposed in front of the light receiving sensor of the optical receiver, and serves to block external light other than the light irradiated from the optical transmitter from entering the optical receiver. The optical filter may be an interference filter, an absorptive filter, a dichroic filter, and the like. The optical filter may be a band pass filter passing only a specific wavelength range.

In the case of using an interference filter as an optical filter, the depth imaging device also has the same problems as the conventional spectral imaging device described above.

First, since the angle of incidence of the source light entering the outer portion of the band pass filter is large, the source light is blocked by the band pass filter, and external light having a shorter wavelength than the source light may pass through the band pass filter.

Second, when the incident angle of the incident light incident on the band pass filter is large, the reflected light has a movement distance that increases in a direction orthogonal to the reflective surfaces, as it is repeatedly reflected between a pair of reflective surfaces. Therefore, a crosstalk phenomenon occurs in which not only pixels corresponding to the subject division area of the corresponding array sensor but also adjacent pixels are irradiated by the incident light, so that the haze component increases and the resolution decreases toward the outer portion of the depth imaging device.

As a method for solving the first problem among these problems, in US Patent Publication No. US2019/0162885A1, there has been disclosed an apparatus which includes an optical transmitter configured to transmit source light, an optical receiver configured to receive reflected light of the source light, and an infrared or near-infrared bandpass filter disposed in front of the photodetector of the optical receiver so that received source light is received at a bandpass filter prior to the photodetector, wherein the band pass filter includes a plurality of regions including a first region capable of transmitting light within a first wavelength range and a second region capable of transmitting light within a second wavelength range.

More specifically, a filter with a bandwidth of 5 nm is used in the first region, which is the center where the incident light is incident almost perpendicularly, and a filter with a bandwidth of 30 nm is used in the second region, which is the outer portion where incident light is incident light relatively more obliquely, so that external light is blocked at least in the center portion where the reflected light is incident almost perpendicularly, thereby increasing the sensitivity.

However, since this method cannot solve the deviations caused by manufacturing deviation of the light source itself, temperature around the light source, and output of the light source, there is a problem that the bandwidth of the band pass filter cannot be sufficiently reduced even in the center.

In addition, there is a problem that the signal-to-noise ratio at the outer portion cannot be improved.

In addition, there is a problem that the crosstalk phenomenon cannot be improved.

[Documents of Related Art]

(Patent Document 0001) US Patent Publication No. US2019/0162885A1

(Patent Document 0002) Korean Patent Publication No. 10-2012-0089312 A

(Patent Document 0003) Japanese Patent Publication No. 2016-050803A

(Patent Document 0004) Japanese Patent Publication No. 2016-011932A

## Disclosure

### Technical Problem

Accordingly, the present invention has been made keeping in mind the above problems occurring in the prior art, and an objective of the present invention is to provide an interference filter, a wide-angle spectral imaging device having the same, and a depth imaging device having the same, with improved sensitivity at the outer portion and improved crosstalk phenomenon.

### Technical Solution

In order to achieve the above object, the present invention provides an interference filter including a first reflective layer having a first surface on which light is incident and a second surface opposite to the first surface; and a second reflective layer having a third surface facing the second surface at a distance and a fourth surface opposite to the third surface from which light is emitted, wherein the interference filter is configured such that a sum of values obtained by multiplying a thickness and a refractive index of all media on a virtual path parallel to an optical axis between the first surface of the first reflective layer and the fourth surface of the second reflective layer become greater as the distance from the optical axis increases.

In addition, at least one of the first reflective layer and the second reflective layer is bent so that the distance between the second surface of the first reflective layer of the interference filter and the third surface of the second reflective layer becomes widened as the distance from the optical axis increases.

In addition, a curvature of the bent reflective layer of the first reflective layer and the second reflective layer becomes smaller as the distance from the optical axis increases.

In addition, an optical material having a thicker thickness as the distance from the optical axis increases and a higher refractive index than that of other media between the first reflective layer and the second reflective layer is filled between the first reflection layer and the second reflection layer of the interference filter.

In addition, at least one of the first reflective layer and the second reflective layer may include a plurality of dielectric layers; and at least one of the plurality of dielectric layers may become thicker as the distance from the optical axis increases.

In addition, the sum of values obtained by multiplying the thickness and the refractive index of each path of all media on the path parallel to the optical axis between the first surface of the first reflective layer and the fourth surface of the second reflective layer may become greater in inverse proportion to a $COS\theta(x)$ value as the distance from the optical axis increases interference filter, according to Equation 2 below.

[Equation 2]

$$\sum_{k=1}^{n} t_k(x)n_k(x) = \frac{m\lambda}{2\cos\theta(x)}$$

Where, $t_k(x)$ and $n_k(x)$ indicates the thickness (length of the path passing through each medium) and the refractive index of each of the media on the path parallel to the optical axis at a distance x from the optical axis, respectively; $\theta(x)$ indicates an angle of incidence according to the distance x from the optical axis; m indicates an integer; and λ indicates a transmission wavelength of the interference filter.

In addition, the present invention provides a wide-angle spectral imaging device, including: an optical receiver configured to receive light from a subject; an optical distance adjusting mechanism configured to adjust an optical distance parallel to an optical axis direction between a first reflective layer and a second reflective layer; and an interference filter disposed in front of the optical receiver, wherein the interference filter is an interference filter according to any one of claims 1 to 6.

In addition, the optical distance adjusting mechanism may be an intelligent optical material which is filled between the first reflective layer and the second reflective layer of the interference filter and has a thickness or a refractive index that is changed depending on an external stimulus.

In addition, the optical distance adjusting mechanism may be a distance adjusting mechanism configured to relatively move the first reflective layer along an optical axis direction with respect to the second reflective layer.

In addition, the present invention provides a depth imaging device, including: an optical transmitter configured to transmit source light; an optical receiver configured to receive reflected light from the source light; and an interference filter disposed in front of the optical receiver, wherein the interference filter is an interference filter according to any one of claims 1 to 6.

In addition, the depth imaging device may further include a center wavelength monitoring unit measuring a change in the center wavelength of the source light; an optical distance adjusting mechanism configured to adjust an optical distance parallel to an optical axis direction between a first reflective layer and a second reflective layer; and a controller controlling the optical distance adjusting mechanism in response to a change in the center wavelength of the source light measured by the center wavelength monitoring unit.

In addition, the optical distance adjusting mechanism may be an intelligent optical material which is filled between the first reflective layer and the second reflective layer of the interference filter and has a thickness or a refractive index that is changed depending on an external stimulus.

In addition, the optical distance adjusting mechanism may be a distance adjusting mechanism configured to relatively move the first reflective layer along an optical axis direction with respect to the second reflective layer.

In addition, the center wavelength monitoring unit may include a first optical sensor configured to increase in sensitivity as a wavelength of the source light increases; and a second optical sensor configured to decrease in sensitivity as the wavelength of the source light increases, wherein a change in the central wavelength of the source light is measured based on a difference in sensitivity between the first and second optical sensors.

**Advantageous Effects**

The interference filter according to the present invention can transmit light of a target wavelength band and block light of other bands, not only in the center portion but also in the outer portion having a large incident angle. Therefore, the depth imaging device and the wide-angle spectral imaging device using the interference filter according to the present invention can have improved sensitivity at the outer portion without undistorted images.

In addition, since the interference filter according to some embodiments of the present invention has a larger distance between the reflective layers at the outer portion of the interference filter, a crosstalk phenomenon caused by light having a large incident angle can be reduced.

**Description of Drawings**

FIG. 1 is a diagram illustrating a Fabry-Perot interferometer (FPI), which is an example of an optical tunable filter.

FIG. 2 is a diagram illustrating the propagation of light between reflective surfaces when incident light having a large incident angle enters the existing Fabry-Perot interferometer.

FIG. 3 is a graph illustrating angular crosstalk to adjacent angles (pixels) according to haze (cloudiness) components.

FIG. 4 is a schematic diagram illustrating a wide-angle spectral imaging device according to an embodiment of the present invention.

FIG. 5 is a schematic diagram illustrating the interference filter and optical receiver shown in FIG. 4;

FIG. 6 is a diagram illustrating a part of the interference filter shown in FIG. 5.

FIG. 7(a) shows the spectrum of light passing through the existing interference filter having a constant interval between reflective layers, and (b) shows the spectrum of light passing through the interference filter shown in FIGS. 5 and 6.

FIG. 8 is a diagram illustrating the operation of the interference filter shown in FIG. 5.

FIG. 9 is a diagram illustrating another example of an interference filter and a part of an optical receiver.

FIGS. 10-12 are schematic diagrams illustrating anther examples of an interference filter.

FIG. 13 is a schematic diagram illustrating a depth imaging device according to an embodiment of the present invention.

FIG. 14 is a diagram illustrating the principle of a center wavelength measurer using a dual sensor.

**Mode for Invention**

Hereinafter, detail with reference to the accompanying drawings. However, the present invention is not limited to the embodiments disclosed below and will be implemented in various different forms. It will be appreciated that the embodiments are provided so that the disclosure of the present invention is complete, and provided to fully inform those skilled in the art of the scope of the invention. Like symbols in the drawings indicate like elements.

[Wide-angle spectral imaging device]

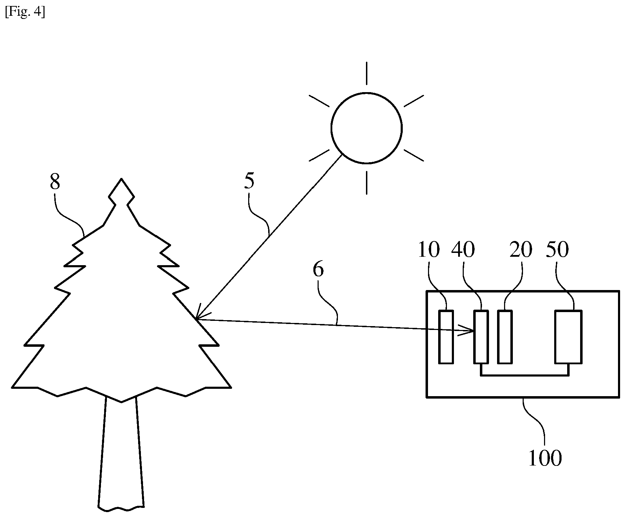

FIG. 4 is a schematic diagram illustrating a wide-angle spectral imaging device according to an embodiment of the present invention. As shown in FIG. 4, a wide-angle spectral imaging device 100 according to an embodiment of the present invention includes an optical system 10 such as a light receiving lens or a light transmitting lens, an optical receiver 20, an interference filter 40, and a controller 50.

The wide-angle spectral imaging device 100 according to an embodiment of the present invention may obtain an image by light of a specific target wavelength band by adjusting the pass band of the interference filter 40. For example, among the light 6 reflected from the subject 8, an image of only red light, an image of only green light, and the like may be obtained.

The optical receiver 20 serves to receive light 6 that is irradiated from a light source such as the sun or an indoor light and reflected from a subject 8, and then passes through the interference filter 40. The optical receiver 20 is divided into a plurality of areas, in which each area receives the light passing through the interference filter 40 from the subject 8 and generates an electrical signal.

The interference filter 40 serves to pass only light of a specific wavelength band of light directed toward the optical receiver 20. The interference filter 40 is disposed between the optical system 10 and light receiving sensor array of the optical receiver 20.

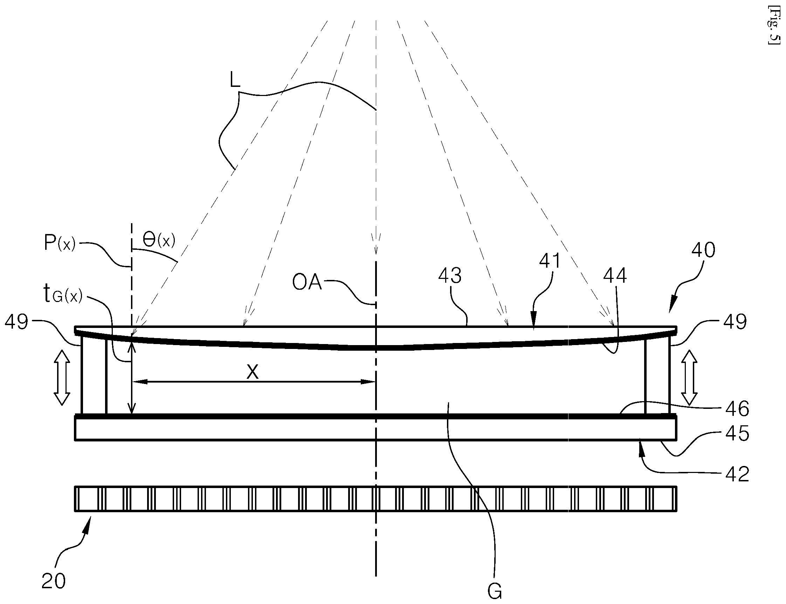

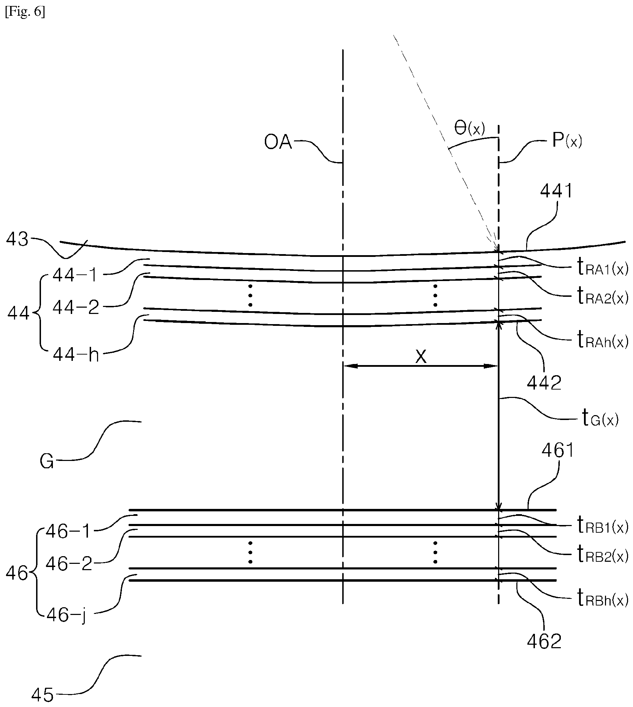

FIG. 5 is a schematic diagram illustrating the interference filter and optical receiver shown in FIG. 4; and FIG. 6 is a diagram illustrating a part of the interference filter shown in FIG. 5.

The interference filter 40 according to the present invention has a structure for reducing positional deviation caused by the fact that the incident light is not incident on all positions of the interference filter 40 at an ideal angle of incidence, that is, perpendicularly.

As shown in FIG. 5, the incident angle $\theta(x)$ of the light L incident on the interference filter 40 increases as the distance x from the optical axis OA increases. When a mobile imaging lens is used as the lens 10, the light incident on the interference filter 40 has an incident angle $\theta(x)$ of about 0 to 30°. That is, the incident angle $\theta(x)$ of the light incident on the center portion of the interference filter 40 (near the optical axis OA) is close to 0°, and an incident angle $\theta(x)$ of light incident on an outermost portion from the optical axis OA may be close to 30°.

According to the present invention, in order to reduce the deviation according to the angle of incidence $\theta(x)$, the optical path of the incident light passing through the interference filter 40 is configured to be constant regardless of the incident angle $\theta(x)$ of the incident light. To this end, the thickness and refractive index of the media constituting the interference filter 40 are adjusted.

As shown in FIG. 5, the interference filter 40 includes a first optical member 41 and a second optical member 42. The first optical member 41 includes a glass substrate 43 and a first reflection layer 44 formed on the glass substrate 43. The second optical member 42 includes a glass substrate 45 and a second reflection layer 46 formed on the glass substrate 43. The first optical member 41 and the second optical member 42 may have a disk shape or an elliptical plate shape.

The first reflective layer 44 and the second reflective layer 46 of the interference filter 40 face each other at a distance $t_G(x)$. The light incident on the interference filter 40 is reflected by the first reflection layer 44 and the second reflection layer 46. Herein, the light of a specific wavelength passes through the interference filter 40 according to the Fabry-Perot interference principle, and the rest of the light is blocked. The gap G between the first reflective layer 44 and the second reflective layer 46 is generally filled with air, but may be made of another medium through which light may pass.

As shown in FIG. 6, the first reflective layer 44 includes a first surface 441 on which light is incident and a second surface 442 opposite to the first surface 441. The second reflective layer 46 includes a third surface 461 facing the second surface 442 at a distance, and a fourth surface 462 opposite to the third surface 462 from which light is emitted. The first reflective layer 44 may include a plurality of sub-layers 44-1 to 44-h, and the second reflective layer 46 may also include a plurality of sub-layers 46-1 to 46-j. The sub-layers may be dielectric layers.

In the present invention, the interference filter 40 is configured such that a sum of values obtained by multiplying the thickness $t_k(x)$ and the refractive index $n_k(x)$ of each of all media on the virtual path P(x) parallel to the optical axis OA between the first surface 441 of the first reflective layer 44 and the fourth surface 462 of the second reflective layer 46 becomes greater, as the distance x from the optical axis OA increases. The optical axis OA means an optical axis of the optical system 10 disposed in front of the interference filter 40.

Here, the media include a medium constituting the first reflective layer 44, a medium filling the gap G between the first reflective layer 44 and the second reflective layer 46, and a medium constituting the second reflective layer 46. When the first reflective layer 44 includes a plurality of sub-layers, it includes media constituting each of the sub-layers. When the second reflective layer 46 includes a plurality of sub-layers, it includes media constituting each of the sub-layers. In addition, when the gap G between the first reflective layer 44 and the second reflective layer 46 is filled with a plurality of media, all of these media are included.

In more detail, the interference filter 40 is configured such that the sum of values obtained by multiplying the thickness and the refractive index of each of all media on the path P(x) parallel to the optical axis OA between the first surface 441 of the first reflective layer 44 and the fourth surface 462 of the second reflective layer 46 becomes greater in inverse proportion to a $COS\theta(x)$ value, as the distance from the optical axis OA increases, according to Equation 2 below.

【Equation 2】

$$\sum_{k=1}^{n} t_k(x)n_k(x) = \frac{m\lambda}{2\cos\theta(x)}$$

Where, $t_k(x)$ and $n_k(x)$ indicate the thicknesses of each path P(x) of each media on the path P(x) parallel to the optical axis OA (length of path P(x) passing through each medium) and the refractive index, respectively; $\theta(x)$ indicates the angle of incidence of the incident light according to the distance x from the optical axis OA; m is an integer; $\lambda$ indicates the transmission wavelength of the interference filter. $\theta(x)$ increases as the distance x from the optical axis increases.

Of course, the left side of Equation 2 may include a term related to the first reflective layer 44 (the first term on the right side); a term related to the gap G between the first reflective layer 44 and the second reflective layer 46 (the second term on the right side); and a term for the second reflective layer 46 (third term on the right side), as shown in Equation 3 below.

【Equation 3】

$$\sum_{k=1}^{n} t_k(x)n_k(x) = \sum_{a=1}^{h} t_{RAa}(x)n_{RAa}(x) + \sum_{b=1}^{i} t_{Gb}(x)n_{Gb}(x) + \sum_{c=1}^{j} t_{RBc}(x)n_{RBc}(x)$$

Where $t_{RAa}(x)$ and $n_{RAa}(x)$ indicates the thickness and refractive index on the path P(x) of each of the sub-layers constituting the first reflection layer 44, respectively; $t_{Gb}(x)$ and $n_{Gb}(x)$ indicates the thickness and refractive index on the each path P(x) of the media filling the gap between the first reflective layer 44 and the second reflective layer 46, respectively; and $t_{RBc}(x)$ and $n_{RBc}(x)$ indicate the thickness and refractive index of the path P(x) of each of the sub-layers constituting the second reflective layer 46, respectively.

As can be seen from Equation 2, when the value of the left side is constant regardless of the distance x from the optical axis OA, as the incident angle $\theta(x)$ increases, the transmission wavelength $\lambda$ of the interference filter 40 shifts to a shorter wavelength.

As shown in FIG. 5, since the incident angle $\theta(x)$ increases as the distance x from the optical axis OA increases, when the value of the left side remains constant, the farther away from the optical axis OA, the shorter wavelength light passes through the interference filter 40. Therefore, the outer potion and the center portion of the image obtained from the wide-angle spectral imaging device 100 are displayed in different colors. The center of the image is displayed in the selected color, whereas the outer portion of the image is displayed in a different color.

In order to prevent such a phenomenon, the interference filter 40 according to the present invention is configured to compensate for a change in the incident angle $\theta(x)$ according to the distance x from the optical axis OA, in order to keep the transmitted wavelength $\lambda$ constant regardless of the distance x from the optical axis OA. That is, the interference filter 40 is configured such that the sum of the values obtained by multiplying the thickness $t_k(x)$ and the refractive index $n_k(x)$ of each of media becomes greater as the distance x from the optical axis OA increases, in order to offset the movement as a short wavelength of the transmission wavelength $\lambda$ due to the change in the angle of incidence $\theta(x)$ according to the distance x from the optical axis OA.

For example, in the interference filter 40 illustrated in FIGS. 5 and 6, the change in the incident angle $\theta(x)$

according to the distance x from the optical axis OA may be compensated in such a manner as to adjust only the distance $t_G(x)$ between the first reflective layer 44 and the second reflective layer 46, while keeping constant the thickness and refractive index of the first reflective layer 44 and the second reflective layer 4 and the refractive index of the medium filling the gap G between the first reflective layer 44 and the second reflective layer 46 regardless of the distance x from the optical axis OA.

The interference filter 40 illustrated in FIGS. 5 and 6 is configured such that the first reflective layer 44 is bent to make widen the distance $t_G(x)$ between the first reflective layer 44 and the second reflective layer 46 as the distance from the optical axis OA increases. Here, the curvature of the first reflective layer 44 becomes smaller as the distance from the optical axis OA increases.

Since $t_{RAa}(x)$ and $n_{RAa}(x)$ of the interference filter 40 of FIGS. 5 and 6 are constant regardless of the distance x from the optical axis OA, and $t_{RBc}(x)$ and $n_{RBc}(x)$ are also constant, a change in the incident angle $\theta(x)$ according to the distance x from the optical axis OA is compensated in such a manner as to adjust only the distance $t_G(x)$ between the first reflective layer 44 and the second reflective layer 46.

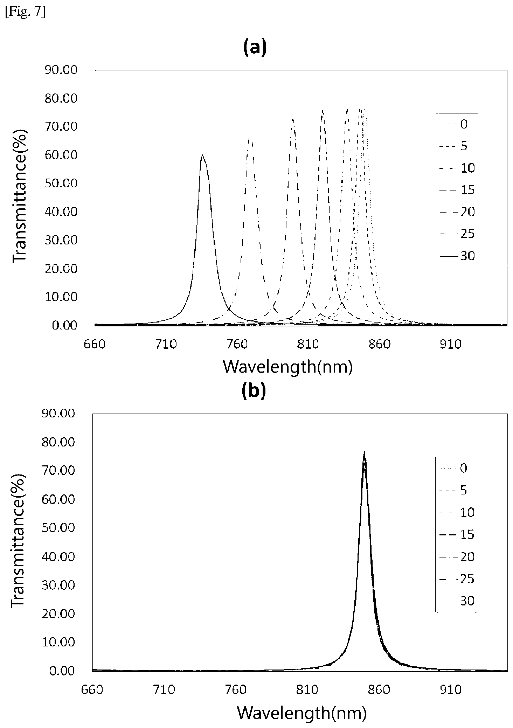

In FIG. 7, (a) shows the spectrum of light passing through the existing interference filter having constant intervals between the reflection layers, and (b) shows the spectrum of light passing through the interference filter shown in FIGS. 5 and 6.

As seen in (a) of FIG. 7, when the distance between the reflective layers is fixed, the center wavelength of the passband changes with the angle of incidence, so that not only the light of the target central wavelength (850 nm in FIG. 7) but also the light of various central wavelengths pass through the interference filter. In other words, light of 850nm passes through the center of the interference filter 40 with incident angle of 0 degrees, whereas light with a wavelength shorter than 850 nm is transmitted through the outer portion of the interference filter 40 with a large incident angle.

As seen in (b) of FIG. 7, when the distance $t_G(x)$ between the first reflective layer 44 and the second reflective layer 46 is adjusted to widen as the distance from the optical axis OA increases, according to Equation 2, only light having a target central wavelength (850 nm) passes through.

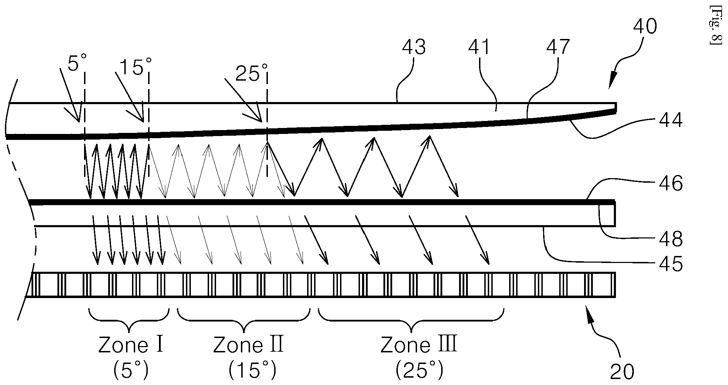

In addition, as shown in FIG. 8, the interference filter 40 according to this embodiment serves to reduce the crosstalk phenomenon.

As may be seen from Equation 2, the wavelength of light passing through the interference filter 40 is determined depending on the distance $t_{G1}(x)$ between the first reflective layer 44 and the second reflective layer 46. As shown in FIG. 8, since the interval $t_{G1}(x)$ widens towards the outer portion, as light incident at a specific angle moves in a direction orthogonal to the second reflective layer 46 while repeating reflection behavior between the first reflective layer 44 and the second reflective layer 46, the moving distance of the reflected light between the first reflective layer 44 and the second reflective layer 46 gradually becomes longer. Therefore, the distance between the first reflective layer 44 and the second reflective layer 46 no longer satisfies Equation 2 for the reflected light, and thus the reflected light no longer passes through the interference filter 40 neither is not incident to pixels in an adjacent area of the light receiving sensor array of the optical receiver 20.

Therefore, the incident light is incident on not only the corresponding pixel of the corresponding target area but also the pixels of adjacent areas, so that the effect of crosstalk may be improved. That is, the moving distance of the reflected light is shortened compared to the existing interference filter of FIG. 2. Accordingly, haze is reduced at the outer portion of the wide-angle spectral imaging device 100, whereby resolution is improved.

In addition, the wide-angle spectral imaging device 100 includes an optical distance adjusting mechanism configured to adjust an optical distance of a path parallel to an optical axis OA between the first reflective layer 44 and the second reflective layer 46.

The optical distance adjusting mechanism serves to adjust the transmission wavelength of the interference filter 40. The optical distance is the distance considering the refractive index of the medium, that is, a value obtained by multiplying the distance and the refractive index of the medium. The optical distance adjusting mechanism may adjust the optical distance by changing the distance between the first reflective layer 44 and the second reflective layer 46 or the refractive index of a medium filling the gap between the first reflective layer 44 and the second reflective layer 46. Since the optical distance adjustment mechanism is for adjusting the transmission wavelength of the interference filter 40, the distance between the first reflective layer 44 and the second reflective layer 46 is adjusted at once regardless of the distance x from the optical axis OA.

As shown in FIG. 5, the optical distance adjustment mechanism according to this embodiment may be a distance adjusting mechanism 49 that is configured to adjust the geometric distance between the first reflective layer 44 and the second reflective layer 46 by moving the first reflective layer 44 relative to the second reflective layer 46 along the optical axis OA direction.

The distance adjusting mechanism 49 may include, for example, an actuator and a spring member. The actuator may be installed to push or pull at least one of the first optical member 41 and the second optical member 42, in a direction in which the first optical member 41 and the second optical member 42 become closer to each other or away from each other. The spring member is provided to apply elastic force to the first optical member 41 and the second optical member 42 in a direction opposite to that of the actuator, to maintain a gap between the first reflective layer 44 and the second reflective layer 46.

In addition, the distance adjusting mechanism 49 may use electromagnetic force. For example, an electrode layer may be formed on each of the first optical member 41 and the second optical member 42, the first optical member 41 and the second optical member 42 may have different polarities to bring closer to each other, and may have the same polarity to be spaced apart from each other.

The controller 50 serves to generate a control signal for adjusting the distance between a pair of reflective layers 44 and 46 of the interference filter 40 in response to a specific target wavelength band, and thus transmit the control signal to the distance adjusting mechanism 49.

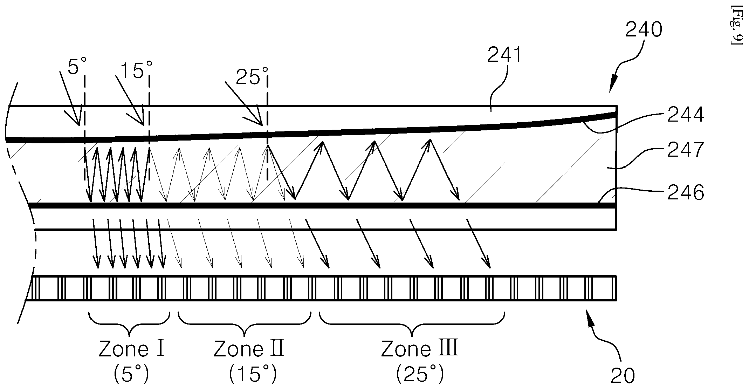

FIG. 9 is a diagram illustrating another example of an interference filter and a part of an optical receiver.

As shown in FIG. 9, as an optical distance control mechanism, a smart optical material (SOM) 247 filling the gap between the first reflective layer 244 and the second reflective layer 246 and a means (not shown) for applying an external stimulus to the smart optical material 247 may be used. A transparent electrode formed on an optical member may be used as a means for applying an external stimulus. The smart optical material 247 is a material of which thickness or refractive index changes depending on an external stimulus. The controller 50 may change the geometric spacing or refractive index between the first reflective layer 244 and the second reflective layer 246 by adjusting an external stimulus applied to the smart optical material 247. In addition, the geometric spacing and the refractive index may be changed simultaneously. When the spacing is widened or the refractive index is increased, the optical distance between the first reflective layer 244 and the second reflective layer 246 increases, and the transmission wavelength of the indirect filter 240 increases

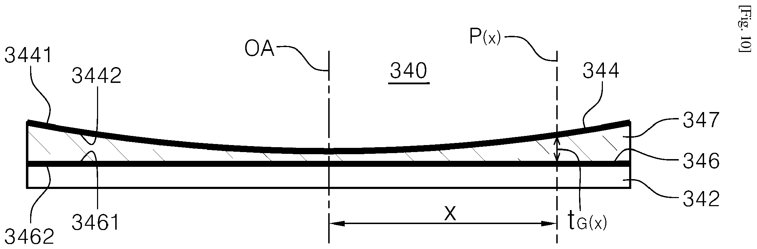

FIGS. 10 to 12 are schematic diagrams illustrating further examples of an interference filter shown in FIG. 4.

The interference filter 340 shown in FIG. 10 may be manufactured by forming a second reflective layer 346 on the upper surface of the glass substrate 342, forming an optical material layer 347 on the second reflective layer 346, and then forming a first reflective layer 344 on the optical material layer 347.

Here, the optical material layer 347 is formed to become thicker toward the outer portion. Accordingly, the distance $t_g(x)$ between the first reflective layer 344 and the second reflective layer 346 formed on the optical material layer 347 increases toward the outer portion. The thickness and refractive index of the remaining media constituting the first reflective layer 344 and the second reflective layer 346 do not change according to the distance x from the optical axis OA.

Therefore, the sum of the values obtained by multiplying the refractive index and the thickness of each of all media on the virtual path P(x) parallel to the optical axis OA between the first surface 3441 of the first reflective layer 344 and the fourth surface 3462 of the second reflective layer 346 becomes greater as the distance x from the optical axis OA increases.

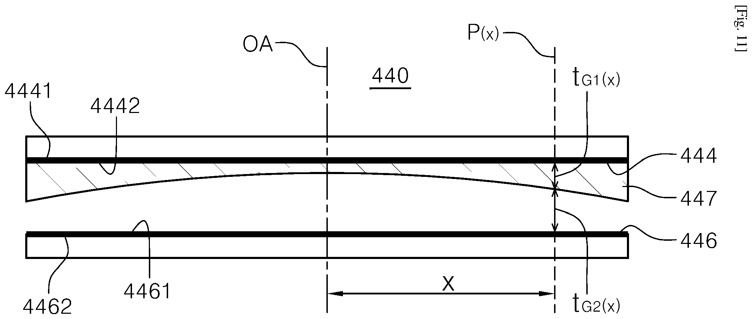

The interference filter 440 shown in FIG. 11 is partially filled with an optical material 447 having a higher refractive index than that of air in the thickness direction of the interference filter 440 between the first reflective layer 444 and the second reflective layer 446. The remaining space between the first reflective layer 444 and the second reflective layer 446 is filled with air. The side of the first reflective layer 444 is filled with an optical material 447, and the side of the second reflective layer 446 is filled with air (or other optical material). Contrary to FIG. 11, the side of the second reflective layer 446 may be filled with an optical material 447. Further, the thickness of the optical material 447 becomes greater as the distance from the optical axis OA increases.

Since the value of the refractive index $n_{G1}$ of the optical material 447, which becomes thicker as it moves away from the optical axis OA, is greater than the refractive index of air, the sum of a product of the thickness and the refractive index of the optical material 447 and a product of the thickness and the refractive index of the air layer, that is, tG1 (x) ×nG1 + tG2 (x) ×1 becomes greater as the distance from the optical axis OA increases. The thickness and refractive index of the remaining media constituting the first reflective layer 444 and the second reflective layer 446 do not change according to on the distance from the optical axis OA.

Therefore, the sum of values obtained by multiplying the refractive index and the thickness of each virtual path P(x) of all media on the virtual path P(x) parallel to the optical axis OA between the first surface 4441 of the first reflective layer 444 and the fourth surface 4462 of the second reflective layer 446 becomes greater, as the distance x from the optical axis OA increases.

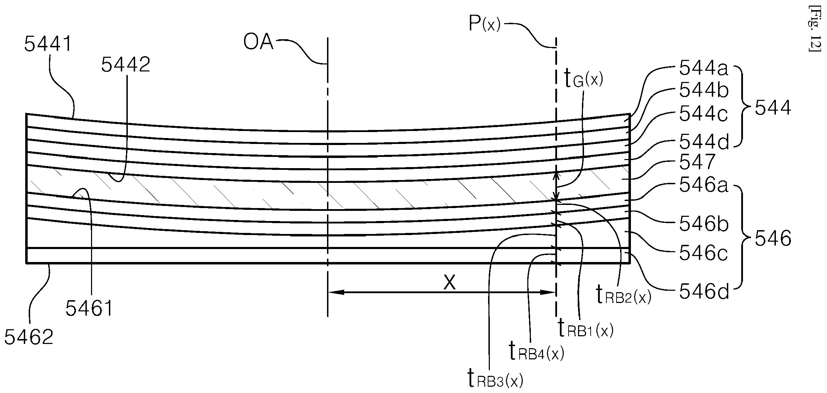

The interference filter 540 shown in FIG. 12 is configured such that the thickness $t_{RB3}(x)$ of at least one 546c of the plurality of dielectric layers 546a to 546d constituting the second reflective layer 546 increases as the distance from the optical axis OA increases.

Since the thickness $t_{RB1}$, $t_{RB2}$, $t_{RB4}$ and the refractive index of the remaining dielectric layers 546a, 546b, and 546d constituting the second reflective layer 546, and the thickness and the refractive index of the remaining dielectric layers 544a, 544b, 544a, 544c, 544d constituting the first reflective layer 544 do not change depending on the distance x from the optical axis OA, the sum of values obtained by multiplying the refractive index and the thickness of each of all media on the virtual path P(x) parallel to the optical axis OA between the first surface 5441 of the first reflective layer 544 and the fourth surface 5462 of the second reflective layer 546 becomes greater as the distance x from the optical axis OA increases.

[Depth imaging device]

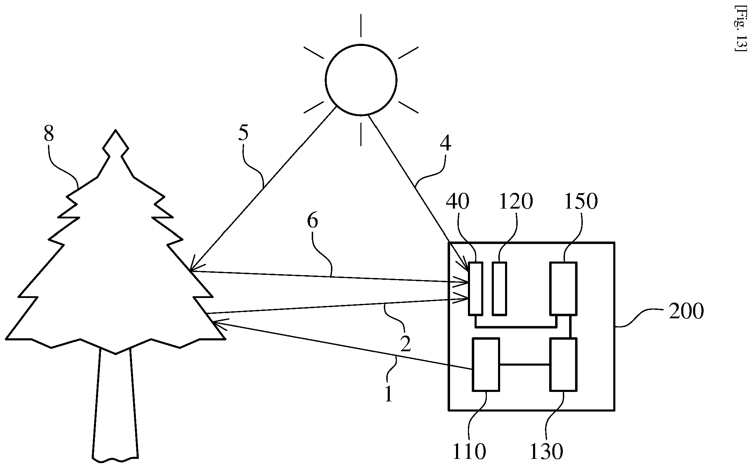

FIG. 13 is a schematic diagram illustrating a depth imaging device according to an embodiment of the present invention. As shown in FIG. 13, the depth imaging device 200 according to an embodiment of the present invention includes an optical transmitter 110, an optical receiver 120, and an interference filter 40.

The light transmitter 110 serves to emit the source light toward the subject 8. The optical transmitter 110 may emit light having a narrow bandwidth belonging to, for example, ultraviolet, visible, and infrared regions in a pulse form. As the optical transmitter 110, for example, a vertical cavity surface emitting laser (VCSEL) may be used.

As the source light emitted from the optical transmitter 110 for the TOF camera, light having a central wavelength of 850, 940, or 1064 nm may be used. As the source light emitted from the optical transmitter 110 for vehicle LIDAR, light having center wavelengths of 905 and 1550 nm may be used. The pulse width of the pulsed source light may be on the order of 1 to 5 nS.

The optical receiver 120 serves to receive the reflected light 2 of the source light 1. The optical receiver 120 is divided into a plurality of areas, and each of the areas receives a light 2 irradiated from the optical transmitter 110 toward the subject and then reflected, the external light 4 directed toward the optical transmitter 110, or the external light 6 reflected from the subject, and generates an electrical signal.

The interference filter 40 serves to block external light 4 and 6 of light directed to the optical receiver 120 and improve the signal-to-noise ratio (SNR) of the optical receiver 120. The interference filter 140 is disposed in front of the light receiving sensor array of the optical receiver 120. As the interference filter 40, all of the interference filters described above may be used.

As already described in the section [Wide-angle spectral imaging device], the interference filter 40 serves to reduce deviation and crosstalk caused by the fact that the incident light does not always enter the interference filter 40 at an ideal incident angle, that is, perpendicularly.

In addition, as shown in FIG. 13, the depth imaging device 200 according to the present embodiment may further include a center wavelength monitoring unit 130 and a controller 150.

Such a configuration allows the signal-to-noise ratio of the optical receiver 120 to be improved by adjusting the pass band of the interference filter 40 in conjunction with the change in the wavelength of the source light transmitted from the optical transmitter 110.

The center wavelength monitoring unit 130 serves to measure a change in the center wavelength of the source light 1. As the center wavelength monitoring unit 130, a center wavelength measurer using a dual sensor may be used.

The central wavelength measurer using a dual sensor includes a first optical sensor configured to increase in sensitivity as the wavelength of the source light 1 increases, and a second optical sensor configured to decrease in sensitivity as the wavelength of the source light increases.

The central wavelength measurer using a dual sensor measures a change in a central wavelength of source light based on a difference in sensitivity between a first optical sensor and a second optical sensor.

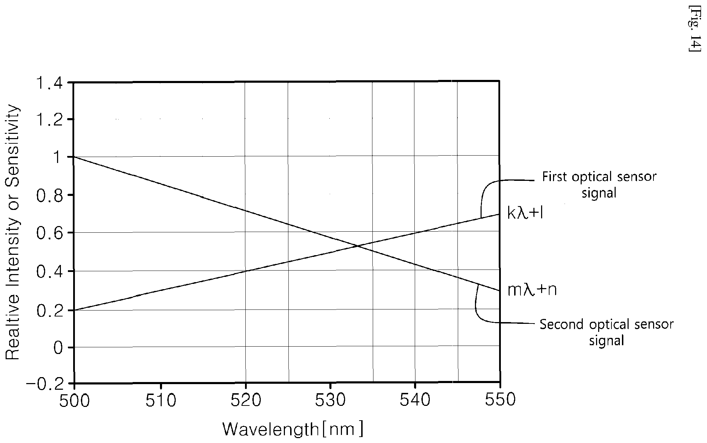

As shown in FIG. 14, the first optical sensor is configured such that its sensitivity increases as the wavelength of the source light increases. The first optical sensor includes a first light receiving element and a first optical filter. The first optical filter is configured such that its transmittance increases as the wavelength of incident light increases. The slope k and the intercept l of the sensitivity graph of the first optical sensor may be changed by appropriately selecting the first light-receiving element and the first optical filter.

As shown in FIG. 14, the second optical sensor is configured such that its sensitivity decreases as the wavelength of the source light increases. The second optical sensor includes a second light receiving element and a second optical filter. The second optical filter is configured such that its transmittance decreases as the wavelength of incident light increases. The slope m and the intercept n of the sensitivity graph of the second optical sensor may be changed by appropriately selecting the second light receiving element and the second optical filter.

In general, since the transmittance of the light receiving element decreases or increases as the wavelength of incident light increases, one of the first optical sensor and the second optical sensor may be composed of only a light receiving element without an optical filter. Whether the transmittance of the light receiving element increases or decreases as the wavelength of the incident light increases is determined depending on the wavelength range of the incident light.

A central wavelength measurer using a dual sensor may measure a central wavelength of source light by measuring a difference between sensitivity values of the first and second optical sensors. For example, if a first optical sensor and a second optical sensor having a sensitivity graph as shown in FIG. 14 are used, when a difference between the sensitivity values of the first optical sensor and the second optical sensor is 0, the center wavelength of the source light becomes approximately 535 nm, whereas when the difference is 0.8, the center wavelength becomes 500 nm.

In addition, as the center wavelength monitoring unit 130, the existing optical spectrometer may be used. The optical spectrometer is a device that shows the intensity of light as a function of wavelength or frequency. A central wavelength measurer using dual sensors has the advantage of being very small in size compared to an optical spectrometer.

According to this embodiment, since it is possible to know the center wavelength of the source light 1 using the center wavelength monitoring unit 130, there is no need to design a wide pass band of the interference filter 40 while considering the variation of the center wavelength according to factors such as manufacturing variation of the optical transmitter 110 itself, variation according to ambient temperature, power consumed by the optical transmitter 110 or current flowing through the optical transmitter 110.

When designing the interference filter 40, the width of the pass band of the interference filter 40 is about 30 nm in the related art, whereas the width of the pass band may be reduced to 5 nm or less according to the present invention. When the width of the pass band of the interference filter 40 is reduced, external light incident on the optical receiver 120 is reduced, so that a signal-to-noise ratio may be improved. For example, in the case of pulsed source light with a center wavelength of 940 nm, a full width at half maximum of 0.7 nm, and a power of 75 W, when the full width at half maximum of the interference filter 40 is reduced from 30 nm to 5 nm, the area of the irradiation surface of the source light is 1 m$^2$, and the signal-to-noise ratio is improved about 585% when the illumination of sunlight is 100 kLux. Even when the illuminance of sunlight is 20 kLux, it may be equally improved.

The controller 150 serves to generate a control signal for adjusting an optical distance between a pair of reflective layers 44 and 46 of the interference filter 40, in response to a change in the center wavelength of the source light measured from the center wavelength monitoring unit 130.

In more detail, when the center wavelength of the source light measured from the center wavelength monitoring unit 130 becomes longer, as described in the section [Wide-angle spectral imaging device], the controller 150 transmits a control signal to the optical distance adjusting mechanism of the interference filter 40 and thus adjusts the optical distance between the first reflective layer 44 and the second reflective layer 46 to increase. In contrast, when the central wavelength of the source light is shortened, the optical distance is adjusted to be shortened.

Although described above with reference to drawings and embodiments, those skilled in the art will understand that the present invention can be variously modified and changed without departing from the technical spirit of the present invention described in the claims below.

[Description of reference numbers]

100: wide-angle spectral imaging device
200: depth imaging device
20: optical receiver
40: interference filter
50: controller

**Claims**

1. An interference filter, comprising:

a first reflective layer having a first surface on which light is incident and a second surface opposite to the first surface; and
a second reflective layer having a third surface facing the second surface at a distance and a fourth surface opposite to the third surface from which light is emitted,
wherein the interference filter is configured such that a sum of values obtained by multiplying a thickness and a refractive index of all media on a virtual path parallel to an optical axis between the first surface of the first reflective layer and the fourth surface of the second reflective layer become greater as the distance from the optical axis increases.

2. The interference filter of claim 1, wherein at least one of the first reflective layer and the second reflective layer is bent so that the distance between the second surface of the first reflective layer of the interference filter and the third surface of the second reflective layer becomes widened as the distance from the optical axis increases.

3. The interference filter of claim 2, wherein a curvature of the bent reflective layer of the first reflective layer and the second reflective layer becomes smaller as the distance from the optical axis increases.

4. The interference filter of claim 1, wherein an optical material having a thicker thickness as the distance from the optical axis increases and a higher refractive index than that of other media between the first reflective layer and the second reflective layer is filled between the first reflection layer and the second reflection layer of the interference filter.

5. The interference filter of claim 1, wherein at least one of the first reflective layer and the second reflective layer includes a plurality of dielectric layers; and
wherein at least one of the plurality of dielectric layers becomes thicker as the distance from the optical axis increases.

6. The interference filter of claim 1, wherein the sum of values obtained by multiplying the thickness and the refractive index of each path of all media on the path parallel to the optical axis between the first surface of the first reflective layer and the fourth surface of the second reflective layer becomes greater in inverse proportion to a $COS\theta(x)$ value as the distance from the optical axis increases interference filter, according to Equation 2 below.

[Equation 2]

$$\sum_{k=1}^{n} t_k(x) n_k(x) = \frac{m\lambda}{2\cos\theta(x)}$$

where, $t_k(x)$ and $n_k(x)$ indicates the thickness (length of the path passing through each medium) and the refractive index of each of the media on the path parallel to the optical axis at a distance x from the optical axis, respectively; $\theta(x)$ indicates an angle of incidence according to the distance x from the optical axis; m indicates an integer; and $\lambda$ indicates a transmission wavelength of the interference filter.

7. A wide-angle spectral imaging device, comprising:

an optical receiver configured to receive light from a subject;
an optical distance adjusting mechanism configured to adjust an optical distance parallel to an optical axis direction between a first reflective layer and a second reflective layer; and
an interference filter disposed in front of the optical receiver,
wherein the interference filter is an interference filter according to any one of claims 1 to 6.

8. The wide-angle spectral imaging device of claim 7, wherein the optical distance adjusting mechanism is an intelligent optical material which is filled between the first reflective layer and the second reflective layer of the interference filter and has a thickness or a refractive index that is changed depending on an external stimulus.

9. The wide-angle spectral imaging device of claim 7, wherein the optical distance adjusting mechanism is a distance adjusting mechanism configured to relatively move the first reflective layer along an optical axis direction with respect to the second reflective layer.

10. A depth imaging device, comprising:

an optical transmitter configured to transmit source light;
an optical receiver configured to receive reflected light from the source light; and
an interference filter disposed in front of the optical receiver,
wherein the interference filter is an interference filter according to any one of claims 1 to 6.

11. The depth imaging device of claim 10, further comprising:

a center wavelength monitoring unit measuring a change in the center wavelength of the source light;
an optical distance adjusting mechanism configured to adjust an optical distance parallel to an optical axis direction between a first reflective layer and a second reflective layer; and
a controller controlling the optical distance adjusting mechanism in response to a change in the center wavelength of the source light measured by the center wavelength monitoring unit.

12. The depth imaging device of claim 11, wherein the optical distance adjusting mechanism is an intelligent optical material which is filled between the first reflective layer and the second reflective layer of the interference filter and has a thickness or a refractive index that is changed depending on an external stimulus.

13. The depth imaging device of claim 11, wherein the optical distance adjusting mechanism is a distance adjusting mechanism configured to relatively move the first reflective layer along an optical axis direction with respect to the second reflective layer.

14. The depth imaging device of claim 10, wherein the center wavelength monitoring unit comprises:

a first optical sensor configured to increase in sensitivity as a wavelength of the source light increases; and
a second optical sensor configured to decrease in sensitivity as the wavelength of the source light increases, wherein a change in the central wavelength of the source light is measured based on a difference in sensitivity between the first and second optical sensors.

[Fig. 1]

[Fig. 2]

[Fig. 3]

[Fig. 4]

[Fig. 5]

[Fig. 6]

[Fig. 7]

**(a)**

**(b)**

[Fig. 8]

[Fig. 9]

[Fig. 10]

[Fig. 11]

[Fig. 12]

[Fig. 13]

[Fig. 14]

<div style="text-align:center">**INTERNATIONAL SEARCH REPORT**</div>

| International application No. |
|---|
| **PCT/KR2021/014635** |

**A. CLASSIFICATION OF SUBJECT MATTER**

**G02B 5/28**(2006.01)i; **G01J 3/26**(2006.01)i; **G01J 3/45**(2006.01)i

According to International Patent Classification (IPC) or to both national classification and IPC

**B. FIELDS SEARCHED**

Minimum documentation searched (classification system followed by classification symbols)

G02B 5/28(2006.01); G01J 3/26(2006.01); G01J 3/36(2006.01); G01J 3/44(2006.01); G01N 21/65(2006.01); G02B 1/14(2014.01); G02B 26/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1반사층(first reflective layer), 제2반사층(second reflective layer), 광축(optical axis), 두께(thickness), 간섭필터(interference filter)

**C. DOCUMENTS CONSIDERED TO BE RELEVANT**

| Category* | Citation of document, with indication, where appropriate, of the relevant passages | Relevant to claim No. |
|---|---|---|
| DY | JP 2016-011932 A (SEIKO EPSON CORP.) 21 January 2016 (2016-01-21)<br>See paragraphs [0022]-[0083]; and figures 1-4 and 8-9. | 1-14 |
| Y | KR 10-2018-0056277 A (SAMSUNG ELECTRONICS CO., LTD.) 28 May 2018 (2018-05-28)<br>See paragraphs [0038]-[0061]; and figures 2 and 8-9. | 1-14 |
| Y | KR 10-1854328 B1 (KWANGWOON UNIVERSITY INDUSTRY-ACADEMIC COLLABORATION FOUNDATION) 14 June 2018 (2018-06-14)<br>See paragraph [0041]; and figure 1. | 5 |
| DA | KR 10-2012-0089312 A (ELBIT SYSTEMS ELECTRO-OPTICS ELOP LTD.) 09 August 2012 (2012-08-09)<br>See paragraph [0006]; and figure 2. | 1-14 |
| A | JP 2013-242359 A (SEIKO EPSON CORP.) 05 December 2013 (2013-12-05)<br>See paragraphs [0032]-[0092]; and figures 1-16. | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 February 2022** | **24 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/014635**

| Patent document cited in search report | | | Publication date (day/month/year) | Patent family member(s) | | | Publication date (day/month/year) |
|---|---|---|---|---|---|---|---|
| JP | 2016-011932 | A | 21 January 2016 | CN | 105319703 | A | 10 February 2016 |
| | | | | CN | 105319703 | B | 05 November 2019 |
| | | | | US | 2015-0377706 | A1 | 31 December 2015 |
| | | | | US | 9880055 | B2 | 30 January 2018 |
| KR | 10-2018-0056277 | A | 28 May 2018 | US | 2018-0143074 | A1 | 24 May 2018 |
| | | | | US | 9989413 | B1 | 05 June 2018 |
| KR | 10-1854328 | B1 | 14 June 2018 | | None | | |
| KR | 10-2012-0089312 | A | 09 August 2012 | EP | 2491359 | A1 | 29 August 2012 |
| | | | | IL | 201742 | D0 | 16 June 2010 |
| | | | | US | 2012-0206813 | A1 | 16 August 2012 |
| | | | | WO | 2011-048603 | A1 | 28 April 2011 |
| | | | | WO | 2011-048603 | A4 | 14 July 2011 |
| JP | 2013-242359 | A | 05 December 2013 | CN | 103424864 | A | 04 December 2013 |
| | | | | JP | 5983020 | B2 | 31 August 2016 |
| | | | | US | 2013-0306838 | A1 | 21 November 2013 |
| | | | | US | 9389412 | B2 | 12 July 2016 |

Form PCT/ISA/210 (patent family annex) (July 2019)

**REFERENCES CITED IN THE DESCRIPTION**

**Patent documents cited in the description**

- US 20190162885 A1
- KR 1020120089312 A
- JP 2016050803 A
- JP 2016011932 A